## Europäisches Patentamt

## European Patent Office

## Office européen des brevets

(19)

(11) Veröffentlichungsnummer: **0 198 181**

**A1**

(12) # EUROPÄISCHE PATENTANMELDUNG

(21) Anmeldenummer: **86102233.3**

(22) Anmeldetag: **20.02.86**

(51) Int. Cl.⁴: **H 02 B 13/00**

(30) Priorität: **17.04.85 DE 3513740**

(43) Veröffentlichungstag der Anmeldung: **22.10.86**
Patentblatt 86/43

(84) Benannte Vertragsstaaten: **BE CH DE FR GB IT LI NL SE**

(71) Anmelder: **BROWN, BOVERI & CIE Aktiengesellschaft, Kallstadterstrasse 1, D-6800 Mannheim (DE)**

(72) Erfinder: **Krämer, Wilhelm, Hegelstrasse 2, D-6902 Sandhausen (DE)**
Erfinder: **Kunze, Rudolf, Dipl.-Ing. (BA), Karl Marx Strasse 22, D-6840 Lampertheim 1 (DE)**

(74) Vertreter: **Kempe, Wolfgang, Dr. et al, c/o Brown, Boveri & Cie AG Postfach 351, D-6800 Mannheim 1 (DE)**

(54) **Der gasdichten Kapselung elektrischer Anlagenteile dienende Kapselungselemente sowie Verfahren zur Herstellung von deren Abdichtungsstellen.**

(57) Für die gasdichte Kapselung elektrischer Anlagenteile, insbesondere für die Kapselung von Funktionsgruppen einer Mittelspannungsschalt- und -verteileranlage, finden neuerdings im wesentlichen aus hartem Strukturschaumstoff bestehende rohrförmige Kapselungselemente (10, 11) Anwendung, welche zwischen den zueinandergerichteten Enden einander benachbarter Kapselungselemente lösbare Abdichtungsstellen (18) bilden. Für die Ausbildung dieser Abdichtungsstellen wird vorgeschlagen, jeweils an wenigstens einem (10) der zueinander gerichteten beiden Enden benachbarter Kapselungselemente (10, 11) eine umlaufende, witterungsbeständige und zugleich gas- und diffusionsdichte gummielastische Dichtung (23) anzuordnen, welche zusammen mit dem Material des zugeordneten Kapselungselementes (10) einen unmittelbaren Werkstoffverbund (entlang 24) bildet. Diese Dichtung kann mit einer freien Randung einer Metallumhüllung (20), welche die aus Strukturschaumstoff bestehenden Kapselungselemente umgeben kann, wenigstens stellenweise verklebt sein. Das Strukturschaumstoff-Material des zugeordneten Kapselungselementes (10) hingegen kann sowohl mit der Dichtung (23) als auch mit der Metallumhüllung (20) einen unmittelbaren Werkstoffverbund bilden.

0198181

BROWN, BOVERI & CIE   Aktiengesellschaft
Mannheim                          15. April 1985
Mp.-Nr. 551/85                    ZPT/P4 - Pa/Sd

Der gasdichten Kapselung elektrischer Anlagenteile dienende K a p s e l u n g s e l e m e n t e  sowie
V e r f a h r e n  zur Herstellung von deren
A b d i c h t u n g s s t e l l e n

Die Erfindung bezieht sich auf der gasdichten Kapselung
elektrischer Anlagenteile, insbesondere der Kapselung
von Funktionsgruppen einer Mittelspannungsschalt- und
-verteileranlage dienende, im wesentlichen aus hartem
Strukturschaumstoff bestehende rohrförmige Kapselungselemente, welche zwischen zueinander gerichteten Enden
einander benachbarter Kapselungselemente eine lösbare
Abdichtungsstelle bilden, sowie auf Verfahrensweisen zur
Herstellung dieser Abdichtungsstellen.

Jüngstens bekanntgeworden sind Kapselungen der oben genannten Art, welche sich also aus einzelnen rohrförmigen
Kapselungselementen zusammensetzen. Diese aus hartem Strukturschaumstoff bestehenden Kapselungselemente können hierbei unter anderem auch mit äußeren Metallumhüllungen versehen sein, welch letzteren außer zu Erdungszwecken insbesondere auch dazu dienen, Wasserdampf- und Gasdiffusionen zu verhindern.

Kritisch bei allen zusammengesetzten Kapselungen und somit auch im vorliegenden Falle sind stets die Abdichtungsstellen zwischen zueinandergerichteten Enden einander benachbarter Kapselungselemente, wobei letztere auch als Abschlußdeckel ausgebildet sein können, d.h. also keine direkte Rohrform aufweisen.

Bekannt und üblich ist es, zwischen den einzelnen zueiandergerichteten Enden der Kapselungselemente umlaufende Dichtungselemente vorzusehen, und im übrigen die besagten Enden der Kapselungselemente an der jeweiligen Abdichtungsstelle zueinander zu drücken. Hierfür wurden bereits entsprechende Spannschellen mit konischen Seitenflanken vorgeschlagen, welche zusammenwirken mit entsprechend schräg geformten flanschartigen Vorsprüngen an den Enden der einzelnen Kapselungselemente. Allerdings weisen derartige eingelegte Dichtungen häufiger - wenn auch nur geringfügig wirkende - Leckstellen auf. Bei Anlagen mit einer stetigen Nachförderung eines Isoliergases sind derartige Leckagen vernachlässigbar, nicht aber bei Anlagen, bei denen eine Nachförderung von beispielsweise Schwefelhexafluorid (SF$_6$) nicht vorgesehen ist und die dennoch über einen langen Zeitraum wartungsfrei arbeiten sollen.

Zur Vermeidung derartiger Leckstellen, ist bereits versucht worden, die besagten Dichtungen einzukleben, was jedoch nur teilweise wirksam ist und im übrigen deshalb

Mp.-Nr. 551/85    3    0.198181

sehr aufwendig ist, weil die Klebestellen sehr sorgfältig und flächendeckend hergestellt werden müssen.

Aufgabe der vorliegenden Erfindung ist es, die Herstellung der besagten Abdichtungsstellen zu vereinfachen und deren Dichtungswirkung nachhaltig zu verbessern.

Die Lösung dieser Aufgabe wird erfindungsgemäß durch den Vorschlag erzielt, an den Abdichtungsstellen jeweils an wenigstens einem der zueinander gerichteten beiden Enden benachbarter Kapselungselemente eine umlaufende, witterungsbeständige und zugleich gas- und diffusionsdichte gummielastische Dichtung anzuordnen, welche zusammen mit dem Material des zugeordneten Kapselungselementes einen unmittelbaren Werkstoffverbund bildet. Ein solcher Werkstoffverbund kann durch das im Anspruch 6 gekennzeichnete Verfahren erzielt werden, d.h. mit anderen Worten: die Dichtung wird beim Ausschäumen des Kapselungselementes mit dem Strukturschaumstoff bereits innig verbunden, wodurch nicht nur ein Verklebungsvorgang entbehrlich wird, sondern auch eine Leckbildung absolut vermieden wird. Selbst wenn an jeder Abdichtungsstelle nur ein Dichtelement Verwendung findet und dieses also nur mit einem der beiden Kapselungselemente einen Werkstoffverbund bilden kann, ist die Gefahr einer Leckbildung bereits deutlich vermindert, therotisch halbiert. In der Praxis erweist sich die Dichtwirkung als noch weiter verbessert, denn - eine exakte Lage der Dichtung bei der Herstellung des Werkstoffverbundes vorausgesetzt - eine Verschiebung der Dichtung aus ihrer Sollage beispielsweise beim Verspannvorgang der beiden Kapselungsenden ist nunmehr ausgeschlossen, so daß auch die Dichtwirkung zwischen der mit dem einen Kapselungselment fest verbundenen Dichtung und dem anzugliedernden zweiten

0198181

Kapselungselement deutlich verbessert werden kann. Als weiterer Vorteil kommt ein vereinfachter Montagevorgang hinzu, da nämlich eine Überprüfung der exakten Lage der Dichtung und gegebenenfalls eine Nachrichtung bei unexakter Lage der Dichtung vermieden werden können.

Diese geschilderten Vorteile sind auch bei Kapselungselementen mit einer äußeren Metallumhüllung erzielbar. In diesem Falle wird - gemäß einem vorteilhaften Ausgestaltungsvorschlag des grundlegenden Erfindungsgedankens - der Vorschlag gemacht, an den Abdichtungsstellen die an wenigstens einem der zueinander gerichteten beiden Enden benachbarter Kapselungselemente angeordnete Dichtung mit einer freien Randung der Metallumhüllung wenigstens stellenweise zu verkleben, und im übrigen einen unmittelbaren Werkstoffverbund zwischen dem Strukturschaumstoff-Material des zugeordneten Kapselungselementes sowohl mit der Dichtung als auch mit der Metallumhüllung - durch den Ausschäumvorgang - herzustellen. Eine vorherige Verklebung der Dichtung mit der Randung der Metallumhüllung vermag hierbei zu verhindern, daß sich zwischen eben dieser Dichtung und der Metallumhüllung ungewollt Strukturschaumstoff einfügt, was die Diffusionsdichtigkeit beeinträchtigen könnte. Dieses bereits angedeutete Verfahren ist auch dem Wortlaut des Anspruches 7 zu entnehmen.

Eine das erwünschte Dichtungsergebnis womöglich noch deutlich verbessernde Ausgestaltung des grundlegenden Erfindungsgedankens ist in dem Vorschlag zu sehen, an den Abdichtungsstellen jeweils an beiden Enden der benachbarten Kapselungselemente Dichtungen beziehungsweise Halbprofildichtungen (siehe nachfolgende Erläuterungen hierzu) anzuordnen, welche mit dem Strukturschaumstoff der zugeordneten Kapselungselemente einen unmittelbaren Werkstoffverbund bilden. Hierbei wird also der abzudichtende Spalt zwischen einander benachbarten Kapselungselementen mittels zweier aneinanderliegender Dichtungen verschlossen, was insoweit wirkungsvoller ist, als beide Dichtungen - wie eingangs bereits erwähnt - deutlich gummielastische Eigenschaften haben und sich bei ihrem Zusammenpressen sehr innig aneinander, bei gewissen kleinen Unebenheiten sogar ineinander zu fügen vermögen und auf diese Weise eine hervorragende, durchaus auch druckdichte Abdichtungen zwischen den einander benachbarten Kapselungselementen zu schaffen vermögen.

Einer weiteren Ausgestaltung zufolge ist es vorgesehen, den umlaufenden Dichtungen insgesamt ein etwa birnenförmiges beziehungsweise pilzförmiges Profil zu geben, welches im Falls der Anordnung von Dichtungen an jedem der beiden benachbarten Enden der Kapselungselement einer Abdichtungsstelle entlang der Profil-Symmetrieachse geteilt ist. Beim Zusammenfügen beider als "Halbprofildichtungen" bezeichneten Einzeldichtungen wird somit wieder das birnenförmige beziehungsweise pilzförmige Profil erzielt. Ein derartiges Gesamtprofil bietet hinreichende Anlageflächen sowohl an gegebenenfalls vorhandenen Metallumhüllungen als auch hinreichende Flächenbereiche für einen innigen Werkstoffverbund mit dem zugeordneten Kapselungselement.

Schließlich wird im Rahmen dieser Erfindung bezüglich des Dichtungsmaterials vorgeschlagen, hierfür eine Neoprene-Qualität zu verwenden, handelsüblich auch unter der Bezeichnung "Perbonan" erhältlich.

Anhand figürlicher Schnittdarstellungen und den nachfolgenden Erläuterungen hierzu sollen der Erfindungsgegenstand sowie vorteilhafte Ausführungsbeispiele hierzu noch einmal erläutert und verdeutlicht werden.

Es zeigt:

Fig. 1 einen Schnitt durch einen Teil einer Kapselung für eine Mittelspannungsschalt- und -verteileranlage ohne darin angeordnete Funktionsgruppen,

Fig. 2 in stark vergrößertem Maßstab eine Abdichtungsstelle zwischen zwei einander benachbarten Kapselungselementen und

Fig. 3 einen kleinen Ausschnitt zweier einander gegenüberliegender Kapselungselemente, welche zur Bildung einer Abdichtungsstelle aneinander zu fügen sind.

F i g u r 1 veranschaulicht einen Schnitt durch mehrere aneinandergefügte Kapselungselemente unterschiedlicher Ausbildung, deren individuelle Eigenheiten hier nicht von Interesse sind. Erkennbar sind rohrförmige Kapselungselemente 10, 11, 12 und 13 (letzteres ist in der Darstellung nach links hin abgebrochen gezeigt) sowie weitere, allerdings nicht ausgesprochen rohrförmige, sondern vielmehr deckelartige Kapselungselemente 14, 15 und 16. Alle Kapselungselemente bestehen zum Kapselungsinneren hin aus einem harten Strukturschaumstoff wie beispielsweise Polyurethan, nach außen hin sind sie von einer Metallumkleidung umgeben. Diese Metallumkleidungen können aus einem Blechmantel bestehen (beispielsweise bei den Kapselungselementen 10 und 12) oder stattdessen auch aus einem Metallgußmantel (beispielsweise ist dies beim Kapselungselement 11 der Fall). An den Stoßstellen der einzelnen Kapselungselemente, d.h. an den zueinandergerichteten Enden einander benachbarter Kapselungselemente, sind lösbare Abdichtungsstellen gebildet, nämlich im einzelnen: zwischen dem rohrförmigen Kapselungselement 10 und dem deckelartigen Kapselungselement 14 eine Abdichtungsstelle 17, zwischen dem Kapselungselement 10 und dem benachbarten Kapselungselement 11 eine Abdichtungsstelle 18, zwischen dem letztgenannten Kapselungselement 11 und dem Kapselungselement 12 eine Abdichtungsstelle 19 usw..

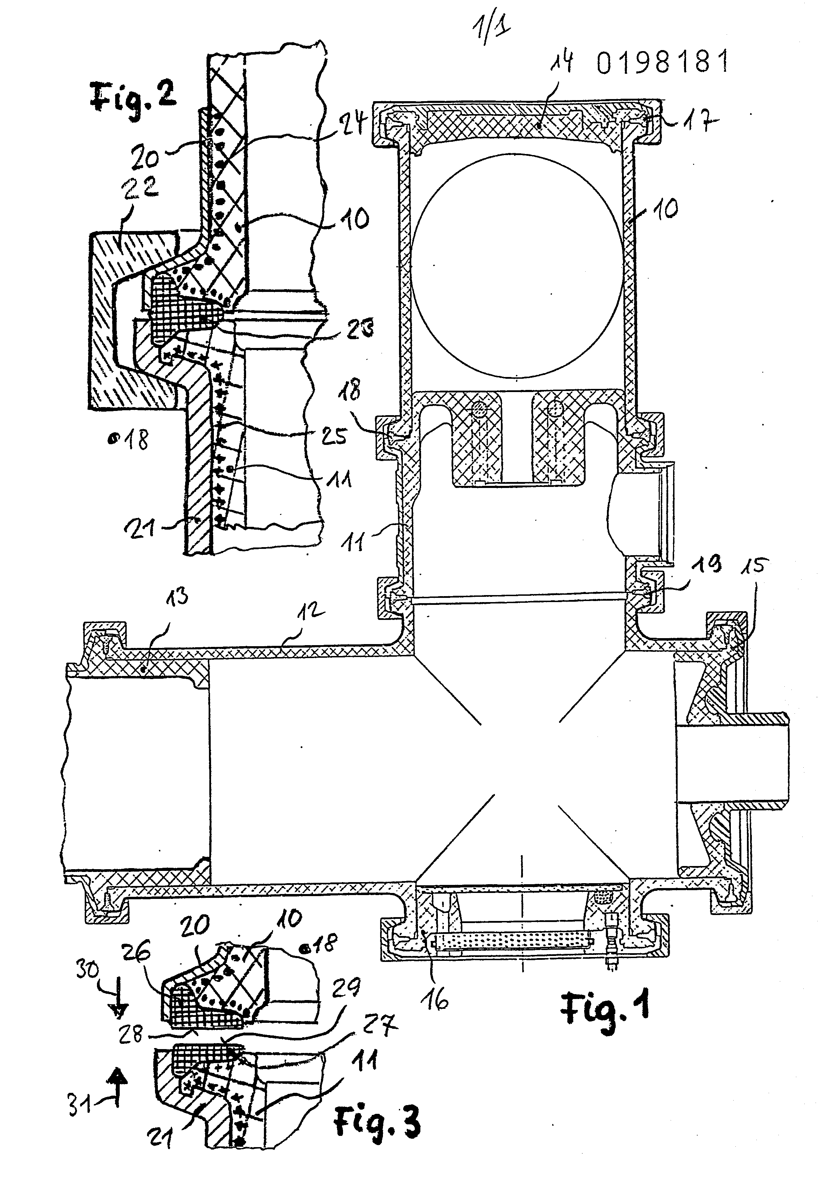

Auf die spezielle Ausbildung dieser Abdichtungsstellen bezieht sich die vorliegende Erfindung, welche nun anhand der F i g u r 2 im einzelnen erläutert werden soll.
Diese Figur 2 zeigt - im Querschnitt und stark vergrößert gegenüber der Darstellung in Figur 1 - die Abdichtungsstelle 18. Erkennbar hier wiederum das aus hartem Strukturschaumstoff bestehende Kapselungselement 10 mit einer aus Blech bestehenden Metallumhüllung 20 und - dem Kapselungselement 10 gegenüberliegend - das Kapselungselement 11 mit einer Metallgußumhüllung 21. Zueinandergepreßt werden die beiden Kapselungselemente 10 und 11 mittels einer mit konischen Seitenflanken versehenen (zwei-teiligen) Spannschelle 22, wobei eine ringartig umlaufende, witterungsbeständige und zugleich gas- und diffusionsdichte, gummielastische Dichtung 23 - die Dichtung an dieser Abdichtstelle 18 bewirkend - an die Wandungen des Kapselungselementes 11 und der Umhüllungen 20 und 21 gepreßt wird. Zwischen der Dichtung 23 und dem Kapselungselement 10 besteht ein beim Ausschäumungsvor gang für das Kapselungselement 10 hergestellter inniger Werkstoffverbund, so daß zwar auch an diesen Übergangsstellen eine Pressung infolge der Wirkung der Spannschelle 22 eintritt, eine zusätzliche Dichtwirkung jedoch nicht, da eine Dichtigkeit hier auch dann besteht, wenn die Dichtung 23 nicht in Richtung des Kapselungselementes 10 gepreßt wird. Ein Werkstoffverbund besteht übrigens auch zwischen dem Kapselungselement 10 und der zugeordneten Metallumhüllung 20, was durch eine Punktierung 24 symbolisiert werden soll.

Auch das Kapselungselement 11 ist mit der zugeordneten Metallgußumhüllung 21 im Sinne eines Werkstoffverbundes sehr innig miteinander verbunden, was durch die Kreuzpunktierung 25 veranschaulicht werden soll.

Die noch verbleibenden Leckmöglichkeiten beschränken sich also auf die Berührungsfläche zwischen der Dichtung 23 und dem aus hartem Strukturschaumstoff bestehenden Teil des Kapselungselmentes 11. Da die Lage der Dichtung 23 durch die vorherige Aufnahme in einem entsprechenden Formwerkzeug und dem anschließenden Ausschäumen des Kapselungselementes 10 sehr exakt definiert ist, ist aber auch diese eben genannte kritische Dichtfläche zwischen der Dichtfläche 23 und dem Kapselungselement 11 weitaus unanfälliger gegen eine Lechbildung als dieses beim bloßen Einlegen der Dichtung 23 oder einem Ankleben an einem der Kapselungselemente 10 beziehungsweise 11 der Fall wäre.

Außer einem deutlich besseren Dichtungseffekt wird darüberhinaus auch noch eine vereinfachte Montage erzielt, da - es wurde eingangs bereits erwähnt - die exakte Lage des Dichtringes 23 vom Montagepersonal nicht mehr im einzelnen überprüft und gegebenenfalls nachgerichtet werden muß.

Eine Alternativlösung zur Schaffung einer wirkungsvollen Abdichtstelle veranschaulicht die F i g u r 3 . Erkennbar hier - wiederum im Schnitt gezeigt - ein kleiner Teil des Kapselungselementes 10 und, gegenüberliegend, des Kapselungselementes 11. Diesen Teilen zugeordnet die Metallumhüllung 20 und die Metallgußumhüllung 21. Abweichend vom in Figur 2 gezeigten Ausführungsbeispiel sind hier die Kapselungselemente 10 und 11 jeweils mit einer Halbprofildichtung 26 beziehungsweise 27 ausgestattet, wobei beide Halbprofildichtungen an ihren Berührungsstellen mit den Kapselungselementen 10 beziehungsweise 11 einen innigen Werkstoffverbund bilden. Dieses symbolisieren die in dieser Darstellung nicht noch einmal bezifferte Punktierung und Kreuzpunktierung (24 bzw. 25 in Figur 2).

Die Abdichtung an dieser Abdichtungsstelle obliegt nun den Dichtflächen 28 und 29 der Halbprofildichtungen 26 und 27. Durch Zueianderfügen und Zusammenpressen der Kapselungselemente 10 und 11 in Richtung der Pfeile 30 und 31 wird die erwünschte Dichtwirkung erzielt, und zwar mit sehr gutem Erfolg, da nämlich die genannten Dichtflächen 28 und 29 infolge geeigneter Materialwahl für die Halbprofildichtungen 26 und 27 (insbesondere vorgeschlagen wird ein Neoprene-Material, beispielsweise Perbonan) und der Ausbildung einer breiten Dichtungsfläche eine praktisch leckfreie Abdichtung herzustellen vermögen.

Hingewiesen schließlich sei auch an dieser Stelle auf das birnenförmige beziehungsweise pilzförmige Profil der Dichtung 23 in Figur 2; eine gleiche Formgebung weisen die Halbprofildichtungen 26 und 27 in ihrer zusammengefügten Lage auf (deswegen die Bezeichnung "Halbprofildichtung").

A n s p r ü c h e

1. Der gasdichten Kapselung elektrischer Anlagenteile, insbesondere der Kapselung von Funktionsgruppen einer Mittelspannungsschalt- und -verteileranlage dienende, im wesentlichen aus hartem Strukturschaumstoff bestehende, vorzugsweise rohrförmige K a p s e l u n g s e l e m e n t e, welche zwischen zueinandergerichteten Enden einander benachbarter Kapselungselemente eine lösbare Abdichtungsstelle bilden, dadurch gekennzeichnet, daß an den Abdichtungsstellen (18) jeweils an wenigstens einem (10) der zueinander gerichteten beiden Enden benachbarter Kapselungselemente (10, 11) eine umlaufende, witterungsbeständige und zugleich gas- und diffusionsdichte, gummielastische Dichtung (23) angeordnet ist, welche zusammen mit dem Material des zugeordneten Kapselungselementes (10) einen unmittelbaren Werkstoffverbund bildet.

2. Kapselungselemente nach Anspruch 1 mit einer äußeren Metallumhüllung, dadurch gekennzeichnet, daß an den Abdichtungsstellen (18) die an wenigstens einem (10) der zueinander gerichteten beiden Enden benachbarter Kapselungselemente (10, 11) angeordnete Dichtung (23) mit einer freien Randung der Metallumhüllung (20) wenigstens stellenweise verklebt ist, daß das Strukturschaumstoff-Material des zugeordneten Kapselungselementes (10) hingegen sowohl mit der Dichtung (23) als auch mit der Metallumhüllung (20) einen unmittelbaren Werkstoffverbund bildet. (Figur 2)

3. Kapselungselemente nach Anspruch 1 oder 2, dadurch gekennzeichnet, daß an den Abdichtungsstellen (18) jeweils an beiden Enden der benachbarten Kapselungselemente (10, 11) Dichtungen beziehungsweise Halbprofildichtungen (26, 27) (siehe auch Anspruch 4) angeordnet sind, welche mit dem Strukturschaumstoff der zugeordneten Kapselungselemente einen unmittelbaren Werkstoffverbund bilden.

4. Kapselungselemente nach wenigstens einem der Ansprüche 1 bis 3, dadurch gekennzeichnet, daß die umlaufenden Dichtungen (23; 26, 27) insgesamt ein etwa birnenförmiges beziehungsweise pilzförmiges Profil aufweisen, welches im Falle der Anordnung von Dichtung an jedem der beiden benachbarten Enden der Kapselungselemente (10, 11) einer Abdichtungsstelle (18) entlang der Profil-Symmetrieachse geteilt ist und sich aus zwei aneinandergefügten Halbprofildichtungen (26, 27) (siehe Anspruch 3) zusammensetzt.

5. Kapselungselemente nach den Ansprüchen 1 bis 4, dadurch gekennzeichnet, daß die Dichtungen (23) beziehungsweise Halbprofildichtungen (26, 27) aus Neoprene bestehen.

6. Verfahren zur Herstellung der Abdichtungsstellen für Kapselungselemente nach wenigstens einem der Ansprüche 1 und 3 bis 5, gekennzeichnet durch nachfolgende Verfahrensschritte:

a) Einlegen der vorgesehenen, gereinigten und gegebenenfalls entfetteten Dichtungselmente (23; 26, 27) in ein Formwerkzeug für das herzustellende Kapselungselement (10; 11) und

b) Ausschäumen des Formwerkzeuges, wobei zwischen den Dichtungselementen (23; 26, 27) und dem Strukturschaumstoff des Kapselungselementes (10; 11) ein unmittelbarer inniger Werkstoffverbund gebildet wird.

7. Verfahren zur Herstellung der Abdichtungsstellen für Kapselungselemente nach wenigstens einem der Ansprüche 2 und 3 bis 5, gekennzeichnet durch nachfolgende Verfahrensschritte:

a) Einfügen oder Einkleben der vorgesehenen, gereinig-ten und gegebenenfalls entfetteten Dichtungselemen-te (23; 26, 27) in die gereinigte und entfettete Metallumhüllung (20, 21) für das herzustellende Kapselungselement (10, 11),

b) Einlegen der so ausgestatteten Metallumhüllung (20, 21) in ein Formwerkzeug für das herzustellende Kapselungselement (10, 11) und

c) Ausschäumen des Formwerkzeuges, wobei zwischen den Dichtungselementen (23; 26, 27) beziehungsweise der Metallumhüllung (20, 21) und dem Strukturschaumstoff des Kapselungselementes (10, 11) ein unmittelbarer inniger Werkstoffverbund gebildet wird.

## Bezugsziffernliste

10 rohrförmige Kapselungselemente

11 "

12 "

13 "

14 deckelartige Kapselungselemente

15 "

16 "

17 Abdichtungsstellen in Figur 1

18 "

19 "

20 Metallumhüllung aus Blech um 10

21 Metallgußumhüllung um 11

22 Spannschelle

23 Dichtung

24 Punktierung

25 Kreuzpunktierung

26 Halbprofildichtung an 10/Figur 3

27 "                          an 11/Figur 3

28 Dichtflächen an 26

29 "                an 27

30 Pfeile

31 "

Fig.2

Fig.1

Fig.3

1/1

14  0198181

Europäisches
Patentamt

## EUROPÄISCHER RECHERCHENBERICHT

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | EP-A-0 083 092 (B.B.C.)<br>* Insgesamt *<br><br>----- | 1,6-7 | H 02 B 13/00<br><br><br><br><br><br>RECHERCHIERTE SACHGEBIETE (Int. Cl.4)<br><br>H 02 B<br>F 16 L |

Der vorliegende Recherchenbericht wurde für alle Patentansprüche erstellt.

| Recherchenort<br>DEN HAAG | Abschlußdatum der Recherche<br>08-07-1986 | Prüfer<br>TOUSSAINT F.M.A. |
|---|---|---|